# EUROPÄISCHE PATENTSCHRIFT

(11) **EP 4 094 054 B1**
(45) Veröffentlichungstag und Bekanntmachung des Hinweises auf die Patenterteilung: **05.03.2025**
(21) Anmeldenummer: 21700165.0
(22) Anmeldetag: 05.01.2021
(51) Int. Cl.: G01F 23/263, G01F 23/80

(54) **ELEKTRONIKEINHEIT FÜR EINE FÜLLSTANDMESSSONDE**
ELECTRONIC UNIT FOR A FILL LEVEL MEASURING PROBE
UNITÉ ÉLECTRONIQUE POUR UNE SONDE DE MESURE DE NIVEAU DE REMPLISSAGE

(30) Priorität: 24.01.2020 DE 102020200879; 24.01.2020 DE 102020200866
(43) Veröffentlichungstag der Anmeldung: 30.11.2022
(73) Patentinhaber: VEGA Grieshaber KG, 77709 Wolfach (DE)
(72) Erfinder: GRIESSBAUM, Karl, 77796 Mühlenbach (DE); STAIGER, Holger, 78739 Hardt (DE); WOEHRLE, Siegbert, 77761 Schiltach (DE)
(74) Vertreter: Maiwald GmbH
(86) Internationale Anmeldenummer: PCT/EP2021/050057
(87) Internationale Veröffentlichungsnummer: WO 2021/148247

(56) Entgegenhaltungen:
- EP-A1- 3 165 883
- EP-A2- 1 794 552
- EP-B1- 1 794 552
- WO-A1-2019/154874
- DE-A1- 102014 107 927
- US-A- 5 532 527
- US-A1- 2005 071 113

## Beschreibung

### Bezugnahme auf verwandte Anmeldungen

Die vorliegende Anmeldung beansprucht die Priorität der deutschen Patentanmeldung Nr. 10 2020 200 879.5, eingereicht am 24. Januar 2020, sowie die Priorität der deutschen Patentanmeldung Nr. 10 2020 200 866.3, eingereicht am 24. Januar 2020.

### Gebiet der Erfindung

Die vorliegende Erfindung betrifft eine Elektronikeinheit für eine Füllstandmesssonde, eine Füllstandmesssonde mit einer solchen Elektronikeinheit und die Verwendung einer Elektronikeinheit in einer Füllstandmesssonde.

### Hintergrund

Ein Füllstand oder Grenzstand kann beispielsweise mittels eines konduktiven Messverfahrens überwacht werden. Hierfür werden Leitfähigkeitsmessungen im Füllmedium vorgenommen. Auch kann der Füllstand oder Grenzstand mittels eines kapazitiven Messverfahrens überwacht werden. Dabei wird der Füllstand aus der Kapazität der von einer Messelektrode und beispielsweise der Wandung des Behälters oder einer Bezugselektrode gebildeten Kapazität ermittelt.

Die Einsatzbereiche dieser beiden Messverfahren können dabei unterschiedlich sein. Beispielsweise ist es für das konduktive Messverfahren entscheidend, dass das Füllmedium eine gewisse Mindestleitfähigkeit aufweist. Eine sehr hohe Leitfähigkeit kann hingegen zu Problemen bei der kapazitiven Füllstandmessung führen, beispielsweise wenn die Elektroden der Füllstandmesssonde als blanke Elektroden ausgeführt sind. Auch können sich Anhaftungen an der Sonde unterschiedlich auswirken.

Es hat sich nunmehr herausgestellt, dass ein weiterer Bedarf besteht, eine verbesserte Elektronikeinheit für eine Füllstandmesssonde bereitzustellen.

Es ist daher eine Aufgabe der vorliegenden Erfindung, eine verbesserte Elektronikeinheit für eine Füllstandmesssonde bereitzustellen. Diese und andere Aufgaben, die beim Lesen der folgenden Beschreibung noch genannt werden oder vom Fachmann erkannt werden können, werden durch den Gegenstand der unabhängigen Ansprüche gelöst. Die abhängigen Ansprüche bilden den zentralen Gedanken der vorliegenden Erfindung in besonders vorteilhafter Weise weiter.

DE 10 2014 107927 A1, EP 3 165 883 A1 zeigen Messsonden aus dem Stand der Technik.

### Zusammenfassung der Erfindung

Die vorliegende Erfindung stellt eine Elektronikeinheit für eine Füllstandmesssonde zur Messung eines Füllstandes eines Mediums, umfassend: zumindest eine erste Erregerelektronikeinheit, eingerichtet zur Abgabe eines ersten Erregersignals; zumindest eine zweite Erregerelektronikeinheit, eingerichtet zur Abgabe eines zweiten Erregersignals; wobei das erste Erregersignal und das zweite Erregersignal unterschiedlich sind; und wobei die Elektronikeinheit eingerichtet ist, um das erste Erregersignal und das zweite Erregersignal zeitgleich an eine Füllstandmesssonde abzugeben.

Mit anderen Worten schlägt die vorliegende Erfindung vor, eine Elektronikeinheit bereitzustellen, mit der zwei Messverfahren zeitgleich durchgeführt werden können. Die Erregersignale können dabei als einzelne Erregersignale oder auch als ein kombiniertes Erregersignal an eine Füllstandmesssonde abgegeben werden.

Vorzugsweise ist die zumindest erste Erregerelektronikeinheit eingerichtet ist, um das erste Erregersignal für eine konduktiven Füllstandmessung abzugeben und wobei die zumindest zweite Erregerelektronikeinheit vorzugsweise eingerichtet ist, um das zweiten Erregersignals für eine kapazitiven Füllstandmessung abzugeben. In diesem Zusammenhang ist darauf hinzuweisen, dass sich die vorliegende Erfindung allerdings nicht auf eine Kombination einer konduktiven und einer kapazitiven Messung beschränkt, auch wenn eine solche Kombination besonders bevorzugt ist. Vielmehr können gleiche oder unterschiedliche Messprinzipien in der vorliegenden Erfindung eingesetzt werden.

Vorteilhafterweise weisen das erste Erregersignal und das zweite Erregersignal unterschiedliche Frequenzen auf. Weiterhin ist es bevorzugt, dass die erste Erregerelektronikeinheit eingerichtet ist, um ein Rechtecksignal und/oder ein Sinussignal als erstes Erregersignal, vorzugsweise für eine konduktive Füllstandmessung abzugeben, wobei das Rechtecksignal und/oder das Sinussignal vorzugsweise mit einer Frequenz von 5 kHz abgegeben wird/werden. Ferner ist es bevorzugt, dass die zweite Erregerelektronikeinheit eingerichtet ist, um ein Dreiecksignal und/oder ein Sinussignal und/oder ein Rechtecksignal als zweites Erregersignal, vorzugsweise für eine kapazitive Füllstandmessung abzugeben, wobei das Dreiecksignal und/oder das Sinussignal und/oder das Rechtecksignal vorzugsweise mit einer Frequenz von 355 kHz abgegeben wird/werden.

Vorzugsweise umfasst die erste Erregerelektronikeinheit und/oder die zweite Erregerelektronikeinheit zumindest eine Direkte Digitale Synthese (DDS; "Direct Digital Synthesis") Einheit, um das erste Erregersignal und/oder das zweite Erregersignale bereitzustellen.

Vorteilhafterwiese sind die erste Erregerelektronikeinheit und die zweite Erregerelektronikeinheit eingerichtet, das erste Erregersignal und das zweite Erregersignal derart abzugeben, dass das erste Erregersignal und das zweite Erregersignal denselben arithmetischen Mittelwert aufweisen. Dadurch können beispielsweise Offsetunterschiede bereits im Rahmen der Erregerelektronik vermieden werden, so dass diese vorteilhafterweise nicht durch die Auswertelektronik berücksichtigt werden muss.

Vorzugsweise umfasst die Elektronikeinheit weiterhin zumindest eine erste Auswerteelektronikeinheit zur Auswertung einer konduktiven Füllstandmessung und/oder zumindest eine zweite Auswerteelektronikeinheit zur Auswertung einer kapazitiven Füllstandmessung, wobei als Eingangssignal der ersten Auswerteelektronikeinheit und/oder der zweiten Auswerteelektronikeinheit ein kombiniertes Ausgangssignal der Füllstandmesssonde anliegt.

In diesem Zusammenhang ist es bevorzugt, dass der ersten Auswerteelektronikeinheit eine erste Filtereinheit zugeordnet ist, die eingerichtet ist, um ein erstes Ausgangssignal für eine konduktive Füllstandmessung aus dem kombinierten Ausgangssignal zu filtern; und/oder wobei der zweiten Auswerteelektronik eine zweite Filtereinheit zugeordnet ist, die eingerichtet ist, um ein zweites Ausgangssignal für eine kapazitive Füllstandmessung aus dem kombinierten Ausgangssignal zu filtern. In diesem Zusammenhang ist es ferner bevorzugt, dass die erste Filtereinheit als Digitale-Filtereinheit bereitgestellt ist, die zumindest eine Bandpassfiltereinheit umfasst, deren Mittenfrequenz dem ersten Erregersignal entspricht; und/oder wobei die zweite Filtereinheit als Digitale-Filtereinheit bereitgestellt ist, die zumindest eine Bandpassfiltereinheit umfasst, deren Mittenfrequenz dem zweiten Erregersignal entspricht. Bei einer solchen Auswertung ist somit keine Schaltanordnung im Empfangszweig notwendig, die zwischen einem konduktiven und einem kapazitiven Signal hin- und herschält. Die Auswertung ist dabei allerdings nicht auf eine solche Ausgestaltung beschränkt, sie kann beispielsweise über eine Prozessoreinheit und/oder eine analog aufgebaute Auswerteelektronikeinheit erfolgen. Ferner können alternativ oder zusätzlich auch Einheiten zur Durchführung einer kontinuierlichen Fourier-Transformation für ein analoges kombiniertes Ausgangssignal einer Füllstandmesssonde und/oder zur Durchführung einer diskreten Fourier-Transformation für ein digitales kombiniertes Ausgangssignal vorgesehen werden. Vorteilhafterweise umfasst die Elektronikeinheit zumindest eine erste Digital-Analog-Wandlereinheit, die eingerichtet ist, um zumindest ein digitales Erregersignal der Elektronikeinheit in ein analoges Erregersignal umzuwandeln, das als analoges Erregersignal an die Füllstandmesssonde abgegeben werden kann. Je nach Aufbau einer Füllstandmesssonde, können dabei zwei unabhängige Erregersignale an die Füllstandmesssonde abgegeben werden oder auch ein einzelnes kombiniertes Erregersignal. In diesem Zusammenhang ist darauf hinzuweisen, dass die vorliegende Erfindung nicht auf einen bestimmten analog-digital Aufbau beschränkt ist. Vielmehr kann die gesamte Signalisierung analog oder digital ausgeführt sein. Auch können unter Einsatz von entsprechenden Analog-Digital-Wandlereinheiten auch analog-digital Kombinationen eingesetzt werden. Derartige Wandlereinheiten können dabei üblicherweise Signale von analog nach digital und umgekehrt umwandeln, so dass nachfolgend sowohl die Begriffe Analog-Digital-Wandlereinheit als auch Digital-Analog-Wandlereinheit verwendet werden, ohne dabei eine bestimmte Wandlungsrichtung auszuschließen.

Vorzugsweise umfasst die Elektronikeinheit zumindest eine zweite Analog-Digital-Wandlereinheit, die eingerichtet ist, um zumindest ein kombiniertes analoges Ausgangssignal der Füllstandmesssonde in ein digitales kombiniertes Ausgangssignal umzuwandeln, das als digitales kombiniertes Ausgangssignal an die beiden Auswerteelektronikeinheiten abgegeben werden kann.

Vorzugsweise umfasst die Elektronikeinheit eine Gewichtungseinheit, die eingerichtet ist, die Messergebnisse einer konduktiven Füllstandmessung und einer kapazitiven Füllstandmessung in Abhängigkeit einer medienspezifischen Eigenschaft des Mediums dessen Füllstand erfasst wird, zu gewichten, wobei die medienspezifische Eigenschaft vorzugsweise die elektrische Leitfähigkeit und/oder die Dielektrizitätskonstante des Mediums dessen Füllstand erfasst wird, ist. Dadurch besteht die Möglichkeit, die Messergebnisse der Elektronikeinheit insoweit anzupassen, als dass ein für ein bestimmtes Medium und/oder für bestimmte Umgebungsbedingungen besser geeignetes Messverfahren größeren Einfluss auf das Messergebnis erhält. In diesem Zusammenhang ist es besonders bevorzugt, dass die eine oder die mehreren medienspezifische Eigenschaften aus einem Test- und/oder einem Kalibriersignal ermittelt werden. Beispielsweise besteht hier die Möglichkeit, ein solches Test- und/oder Kalibriersignal in regelmäßigen Abständen abzugeben und auszuwerten, so dass sich die Elektronikeinheit automatisch an sich möglicherweise verändernde Umgebungsbedingungen und/oder unterschiedliche Medien anpassen kann. Ein solches Testsignal kann dabei auch durch eine reguläre Messung bereitgestellt werden. Auch kann vorgesehen werden, dass eines der beiden Erregersignale deaktiviert wird und ggf. auch die korrespondierenden Bauteile der Elektronikeinheit deaktiviert werden, die für ein solches Messverfahren benötigt werden, wenn eine Auswertung des Test- und/oder Kalibriersignals ergibt, dass eines der beiden Messverfahren keine sinnvollen Messergebnisse liefert, beispielsweise weil die Leitfähigkeit des Füllmediums zu gering oder zu hoch ist, so dass entweder die konduktive oder die kapazitive Messung keine sinnvollen Ergebnisse liefern kann. In diesem Fall kann auch vorgesehen sein, dass ein deaktiviertes Messverfahren unter bestimmten Umständen oder auch nach Ablauf einer bestimmten Zeit wieder (probeweise) zugeschaltet (aktiviert) wird, um anschließend entscheiden zu können, ob sich die Bedingungen geändert haben und dieses Messverfahren wieder sinnvoll durchgeführt werden kann. Hierdurch kann Energie und Zeit gespart werden, da nicht beide Messverfahren ausgewertet werden müssen, wenn durch eines der beiden Messverfahren keine sinnvollen Messergebnisse bereitstellt werden kann. In diesem Zusammenhang ist es ebenfalls möglich, dass ein Bediener eines der beiden Messverfahren manuell deaktiviert, so dass die Elektronikeinheit in diesem Fall nur nach einem Messverfahren misst.

Weiterhin betrifft die vorliegende Erfindung einen Füllstandmesssensor bzw. ein Füllstandmessgerät zur Messung eines Füllstandes, umfassend zumindest eine oben beschriebene Elektronikeinheit. Der Begriff des Füllstandmesssensors ist vorliegend breit zu verstehen und umfasst alle Einrichtungen, mit denen ein Füllstand und/oder ein Grenzstand eines Mediums in einem Behälter, einem Rohr, einem Becken oder dergleichen erfasst werden kann.

Schließlich betrifft die vorliegende Erfindung die Verwendung einer oben beschriebenen Elektronikeinheit in einem Füllstandmesssensor bzw. Füllstandmessgerät zur Messung eines Füllstandes.

### Beschreibung einer bevorzugten Ausführungsform

Nachfolgend wird eine detaillierte Beschreibung der Figuren gegeben, darin zeigt
- **Figur 1**: eine schematische Ansicht einer bevorzugten Ausführungsform einer erfindungsgemäßen Elektronikeinheit für ein Füllstandmesssensor; und
- **Figur 2**: eine schematische Ansicht einer weiteren bevorzugten Ausführungsform einer erfindungsgemäßen Elektronikeinheit.

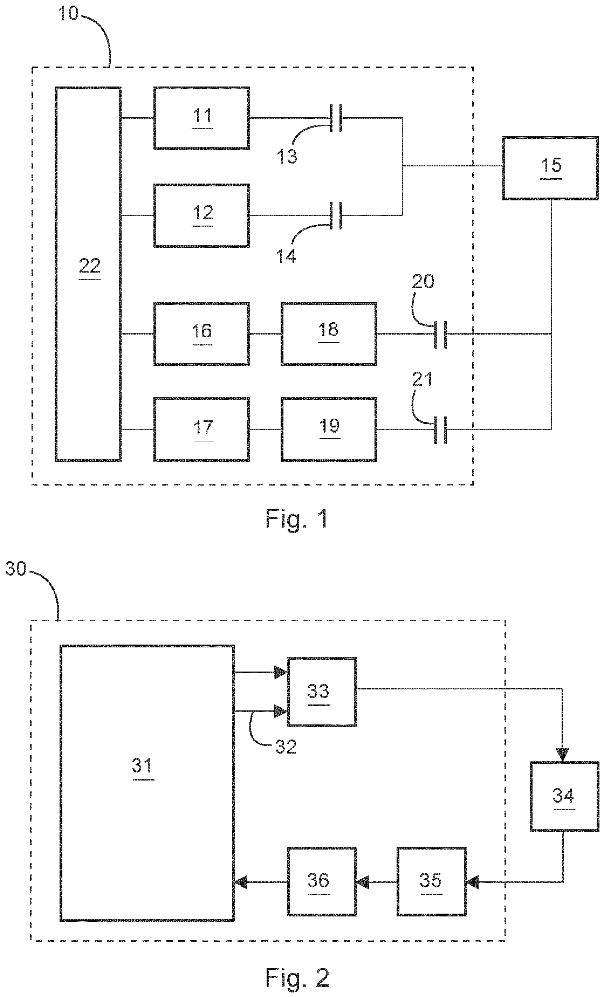

Figur 1 zeigt eine schematische Ansicht einer bevorzugten Ausführungsform einer erfindungsgemäßen Elektronikeinheit 10 für ein Füllstandmesssensor bzw. ein Füllstandmessgerät.

Die Elektronikeinheit 10 umfasst eine erste Erregerelektronikeinheit 11 zur Erzeugung eines ersten Erregersignals für eine konduktive Füllstandmessung. Das erste Erregersignal ist dabei in der bevorzugten Ausführungsform ein digitales Rechtecksignal oder ein digitales Sinussignal mit einer Frequenz von 5 kHz. Weiterhin umfasst die Elektronikeinheit eine zweiter Erregerelektronikeinheit 12 zur Erzeugung eines zweiten Erregersignals für eine kapazitive Füllstandmessung. Das zweite Erregersignal ist dabei in der bevorzugten Ausführungsform ein digitales Dreieck-, Sinus- oder Rechtecksignal mit einer Frequenz von 355 kHz. Die Erregersignale können beispielsweise derart von den Elektronikeinheiten abgegeben werden, dass das erste Erregersignal und das zweite Erregersignal denselben arithmetischen Mittelwert aufweisen, wobei eine solche Mittelung auch durch entsprechende Kondensatoren, beispielsweise die in Figur 1 gezeigten Kondensatoren 13, 14 oder die in Figur 2 gezeigten Kondensatoren 20, 21 erfolgen kann. Dies ist insbesondere bevorzugt, wenn beide Erregersignale als kombiniertes Erregersignal abgegeben werden, da dadurch große Offsetunterschiede vermieden werden können.

Die Erregerelektronikeinheiten 11, 12 können beispielsweise eine Direkte Digitale Synthese (DDS; "Direct Digital Synthesis") Einheit umfassen, um die digitalen Erregersignale bereitzustellen. Die vorliegende Erfindung ist dabei allerdings nicht auf eine digitale Signalerzeugung beschränkt. Zwar sind in der gezeigten Ausführungsform die Erregerelektronikeinheiten 11, 12 als separate Einheiten ausgeführt, diese können allerdings auch in einer integralen Einheit zusammengeführt sein. Wie in Figur 1 gezeigt, können in der Signalstrecke darüber hinaus auch galvanische Trennungen in Form von Kondensatoren 13, 14 vorgesehen sein.

Die Erregersignale können anschließend zeitgleich an eine Füllstandmesssonde 15 abgegeben werden, wobei die Erregersignale dabei als kombiniertes Erregersignal oder als getrennte Erregersignale an die Füllstandmesssonde 15 abgegeben werden können. Auch können die Erregersignale dabei digital oder analog an die Füllstandmesssonde 15 abgegeben werden.

Schließlich umfasst die Elektronikeinheit 10 in der gezeigten bevorzugten Ausführungsform zudem eine erste Auswerteelektronikeinheit 16 zur Auswertung einer konduktiven Füllstandmessung eine zweite Auswerteelektronikeinheit 17 zur Auswertung einer kapazitiven Füllstandmessung, wobei als Eingangssignal der ersten Auswerteelektronikeinheit 16 und der zweiten Auswerteelektronikeinheit 18 ein kombiniertes Ausgangssignal der Füllstandmesssonde 15 anliegt. Die Signale der Füllstandmesssonde 15 werden grundsätzlich in analog von der Füllstandmesssonde 15 abgegeben. Allerdings besteht auch die Möglichkeit der Füllstandmesssonde 15 eine Analog-Digital-Wandlereinheit zuzuordnen, so dass das kombinierte Ausgangssignal auch digital bereitgestellt werden kann. Wie in Figur 1 gezeigt, ist der ersten Auswerteelektronikeinheit 16 eine erste Filtereinheit 18 zugeordnet ist, die eingerichtet ist, um ein erstes Ausgangssignal für eine konduktive Füllstandmessung aus dem kombinierten Ausgangssignal zu filtern. Der zweiten Auswerteelektronikeinheit 17 ist eine zweite Filtereinheit 19 zugeordnet, die eingerichtet ist, um ein zweites Ausgangssignal für eine kapazitive Füllstandmessung aus dem kombinierten Ausgangssignal zu filtern.

Die erste Filtereinheit 18 kann beispielsweise als Digitale-Filtereinheit bereitgestellt werden, die zumindest eine Bandpassfiltereinheit umfasst, deren Mittenfrequenz dem ersten Erregersignal entspricht. Die zweite Filtereinheit 19 kann ebenfalls als Digitale-Filtereinheit bereitgestellt werden, die zumindest eine Bandpassfiltereinheit umfasst, deren Mittenfrequenz dem zweiten Erregersignal entspricht. Die Auswertung der Ausgangsignale des Füllstandmesssensors 15 ist dabei allerdings nicht auf eine solche Ausgestaltung beschränkt, sie kann beispielsweise auch über eine Prozessoreinheit und/oder über eine analog aufgebaute Auswerteelektronikeinheit erfolgen. Ferner können alternativ oder zusätzlich auch Einheiten zur Durchführung einer kontinuierlichen Fourier-Transformation für ein analoges kombiniertes Ausgangssignal einer Füllstandmesssonde oder zur Durchführung einer diskreten Fourier-Transformation für ein digitales kombiniertes Ausgangssignal vorgesehen werden. Die Signale der Auswerteelektronikeinheiten 16, 18 können anschließend an eine Ausgabeeinheit 22 und/oder eine weitere Prozessoreinheit weitergeleitet werden, die aus den Signalen der Auswerteelektronikeinheiten 16, 18 beispielsweise einen konkreten Füllstand eines Behälters ableiten.

Darüber hinaus ist darauf hinzuweisen, dass auch mehr als zwei Erregersignale und auch mehr als zwei Auswerteelektronikeinheiten mit unterschiedlichen Filtereinheiten vorgesehen werden können. Die vorliegende Erfindung ist daher nicht auf die zwei beispielhaft angeführten Erregersignale und die zwei beispielhaft angeführten Auswerteelektronikeinheiten beschränkt.

Figur 2 zeigt ein zweites bevorzugtes Ausführungsbeispiel einer erfindungsgemäßen Elektronikeinheit 30. In diesem Ausführungsbeispiel ist der Elektronikeinheit 30 zusätzlich ein erster Digital-Analog-Wandler 33 zugeordnet, mit der die hier gezeigten zwei Erregersignale 32, die in einer Erreger- und Auswerteelektronikeinheit 31 erzeugt werden, in ein kombiniertes analoges Erregersignal umgewandelt und an eine Füllstandmesssonde 34 abgegeben werden können. Die Erreger- und Auswerteelektronikeinheit 31 kann beispielsweise einen Microcontroller mit entsprechender Peripherie und Software umfassen. Die Erreger- und Auswerteelektronikeinheit 31 kann dabei beispielsweise wie in Figur 1 gezeigt aufgebaut sein. Darüber hinaus kann der Elektronikeinheit 30 beispielsweise eine weitere Elektronikeinheit 35 zur Durchführung einer Fourier-Transformation zugeordnet werden, die das analoge kombinierte Ausgangssignal der Füllstandmesssonde 34 transformiert, bevor dieses nachfolgend beispielsweise einem zweiten Analog-Digital-Wandler 36 zugeführt wird und anschließend in die Erreger- und Auswerteelektronikeinheit 31 zur weiteren Auswertung geführt wird.

In diesem Zusammenhang ist darauf hinzuweisen, dass die vorliegende Erfindung nicht auf einen bestimmten analog-digital Aufbau beschränkt ist. Vielmehr kann die gesamte Signalisierung analog oder digital ausgeführt sein. Auch können unter Einsatz von entsprechenden Analog-Digital-Wandler-Einheiten auch analog-digital Kombinationen eingesetzt werden. Auch ist es möglich anstatt der in Figur 2 gezeigten überwiegend digital ausgeführten Ausführung, entweder nur die Filterung des Ausgangssignals der Füllstandmesssonde oder auch nur die Bildung des Erregersignals digital auszuführen.

Die vorliegende Erfindung ist dabei allerdings nicht auf die vorhergehenden bevorzugten Ausführungsbeispiele beschränkt, solange sie vom Gegenstand der folgenden Ansprüche umfasst ist. Ergänzend wird darauf hingewiesen, dass die Begriffe "umfassend" und "aufweisend" keine anderen Elemente oder Schritte ausschließen und die unbestimmten Artikel "eine" oder "ein" keine Vielzahl ausschließen. Darüber hinaus ist der Begriff der Einheit breit zu verstehen, insbesondere ist dieser Begriff nicht dahingehend zu verstehen, dass die jeweiligen Einheiten als integrale Bauteile ausgebildet sein müssen. Auch können die jeweiligen Einheiten auch unterschiedlich positioniert werden. Schließlich können auch unterschiedliche Einheiten in einer Baugruppe zusammengeführt sein. Ferner wird darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können.

### Bezugszeichenliste

- 10: erstes Ausführungsbeispiel einer erfindungsgemäßen Elektronikeinheit
- 11: erste Erregerelektronikeinheit
- 12: zweite Erregerelektronikeinheit
- 13: Kondensator
- 14: Kondensator
- 15: Füllstandmesssonde
- 16: erste Auswerteelektronikeinheit
- 17: zweite Auswerteelektronikeinheit
- 18: erste Filtereinheit
- 19: zweite Filtereinheit
- 20: Kondensator
- 21: Kondensator
- 22: Ausgabeeinheit
- 30: zweites Ausführungsbeispiel einer erfindungsgemäßen Elektronikeinheit
- 31: Erreger- und Auswerteelektronikeinheit
- 32: Erregersignale
- 33: Analog-Digital-Wandlereinheit/Digital-Analog-Wandlereinheit
- 34: Füllstandmesssonde
- 35: Elektronikeinheit (Fourier-Transformation)
- 36: Analog-Digital-Wandlereinheit/Digital-Analog-Wandlereinheit

## Patentansprüche

1. Elektronikeinheit (10, 30) für eine Füllstandmesssonde (15, 34) zur Messung eines Füllstandes eines Mediums, umfassend:
zumindest eine erste Erregerelektronikeinheit (11), eingerichtet zur Abgabe eines ersten Erregersignals;
zumindest eine zweite Erregerelektronikeinheit (12), eingerichtet zur Abgabe eines zweiten Erregersignals; wobei
das erste Erregersignal und das zweite Erregersignal unterschiedlich sind; **dadurch gekennzeichnet, daß**
die Elektronikeinheit (10, 30) eingerichtet ist, um das erste Erregersignal und das zweite Erregersignal zeitgleich an eine Füllstandmesssonde (15, 34) abzugeben.

2. Elektronikeinheit (10, 30) nach Anspruch 1, wobei die zumindest erste Erregerelektronikeinheit (11) eingerichtet ist, um das erste Erregersignal für eine konduktiven Füllstandmessung abzugeben; und wobei
die zumindest zweite Erregerelektronikeinheit (12) eingerichtet ist, um das zweiten Erregersignals für eine kapazitiven Füllstandmessung abzugeben.

3. Elektronikeinheit (10, 30) nach Anspruch 1 oder Anspruch 2, wobei das erste Erregersignal und das zweite Erregersignal unterschiedliche Frequenzen aufweisen.

4. Elektronikeinheit (10, 30) nach einem der vorhergehenden Ansprüche, wobei die erste Erregerelektronikeinheit (11) eingerichtet ist, um ein Rechtecksignal und/oder ein Sinussignal als erstes Erregersignal, vorzugsweise für eine konduktive Füllstandmessung abzugeben, wobei das Rechtecksignal und/oder das Sinussignal vorzugsweise mit einer Frequenz von 5 kHz abgegeben wird.

5. Elektronikeinheit (10, 30) nach einem der vorhergehenden Ansprüche, wobei die zweite Erregerelektronikeinheit (12) eingerichtet ist, um ein Dreiecksignal und/oder ein Sinussignal und/oder ein Rechtecksignal als zweites Erregersignal, vorzugsweise für eine kapazitive Füllstandmessung abzugeben, wobei das Dreiecksignal und/oder das Sinussignal und/oder das Rechtecksignal vorzugsweise mit einer Frequenz von 355 kHz abgegeben wird.

6. Elektronikeinheit (10, 30) nach einem der vorhergehenden Ansprüche, wobei die erste Erregerelektronikeinheit (11) und/oder die zweite Erregerelektronikeinheit (12) zumindest eine Direkte Digitale Synthese (DDS; "Direct Digital Synthesis") Einheit umfasst, um das erste Erregersignal und/oder das zweite Erregersignale bereitzustellen.

7. Elektronikeinheit (10, 30) nach einem der vorhergehenden Ansprüche, wobei die erste Erregerelektronikeinheit (11, 31) und die zweite Erregerelektronikeinheit (12, 31) eingerichtet sind, das erste Erregersignal und das zweite Erregersignal derart abzugeben, dass das erste Erregersignal und das zweite Erregersignal denselben arithmetischen Mittelwert aufweisen.

8. Elektronikeinheit (10, 30) nach einem der vorhergehenden Ansprüche, wobei die Elektronikeinheit (10, 30) weiterhin zumindest eine erste Auswertelektronikeinheit (16) zur Auswertung einer konduktiven Füllstandmessung und/oder zumindest eine zweite Auswerteelektronikeinheit (17) zur Auswertung einer kapazitiven Füllstandmessung umfasst, wobei als Eingangssignal der ersten Auswerteelektronikeinheit (16) und/oder der zweiten Auswerteelektronikeinheit (17) ein kombiniertes Ausgangssignal der Füllstandmesssonde (15, 34) anliegt.

9. Elektronikeinheit (10, 30) nach Anspruch 8, wobei der ersten Auswerteelektronikeinheit (16) eine erste Filtereinheit (18) zugeordnet ist, die eingerichtet ist, um ein erstes Ausgangssignal für eine konduktive Füllstandmessung aus dem kombinierten Ausgangssignal zu filtern; und/oder wobei der zweiten Auswerteelektronikeinheit (17) eine zweite Filtereinheit (19) zugeordnet ist, die eingerichtet ist, um ein zweites Ausgangssignal für eine kapazitive Füllstandmessung aus dem kombinierten Ausgangssignal zu filtern.

10. Elektronikeinheit (10, 30) nach Anspruch 8 oder Anspruch 9, wobei die erste Filtereinheit (18) als Digitale-Filtereinheit bereitgestellt ist, die zumindest eine Bandpassfiltereinheit umfasst, deren Mittenfrequenz dem ersten Erregersignal entspricht; und/oder wobei die zweite Filtereinheit (19) als Digitale-Filtereinheit bereitgestellt ist, die zumindest eine Bandpassfiltereinheit umfasst, deren Mittenfrequenz dem zweiten Erregersignal entspricht.

11. Elektronikeinheit (10, 30) nach einem der vorhergehenden Ansprüche, wobei die Elektronikeinheit (10, 30) zumindest eine erste Digital-Analog-Wandlereinheit (33) umfasst, die eingerichtet ist, um zumindest ein digitales Erregersignal der Elektronikeinheit (10, 30) in ein analoges Erregersignal umzuwandeln, das als analoges Erregersignal an die Füllstandmesssonde (15, 34) abgegeben werden kann.

12. Elektronikeinheit (10, 30) nach einem der vorhergehenden Ansprüche, wobei die Elektronikeinheit (10, 30) zumindest eine zweite Analog-Digital-Wandlereinheit (36) umfasst, die eingerichtet ist, um ein analoges Ausgangssignal der Füllstandmesssonde (15, 34) in ein digitales Ausgangssignal umzuwandeln, das als digitales Ausgangssignal an die Auswerteelektronikeinheiten (16, 17, 31) abgegeben werden kann.

13. Elektronikeinheit (10, 30) nach einem der vorhergehenden Ansprüche, wobei die Elektronikeinheit (10, 30) eine Gewichtungseinheit umfasst, die eingerichtet ist, die Messergebnisse einer konduktiven Füllstandmessung und einer kapazitiven Füllstandmessung in Abhängigkeit einer medienspezifischen Eigenschaft des Mediums dessen Füllstand erfasst wird, zu gewichten, wobei die medienspezifische Eigenschaft vorzugsweise die elektrische Leitfähigkeit und/oder die Dielektrizitätskonstante des Mediums dessen Füllstand erfasst wird, ist, insbesondere wobei eine oder mehrere medienspezifische Eigenschaften aus einem Test- und/oder einem Kalibriersignal ermittelt werden.

14. Füllstandmesssonde (15, 34) zur Messung eines Füllstandes, umfassend zumindest eine Elektronikeinheit (10, 30) nach einem der Ansprüche 1 bis 13.

15. Verwendung einer Elektronikeinheit (10, 30) nach einem der Ansprüche 1 bis 13 in einem Füllstandmesssensor zur Messung eines Füllstandes.

## Claims

1. Electronic unit (10, 30) for a level measuring probe (15, 34) for measuring a level of a medium, comprising:
at least one first excitation electronic unit (11), configured to emit a first excitation signal;
at least one second excitation electronic unit (12), configured to emit a second excitation signal; wherein
the first excitation signal and the second excitation signal are different; **characterized in that**
the electronic unit (10, 30) is configured to emit the first excitation signal and the second excitation signal simultaneously to a level measuring probe (15, 34).

2. Electronic unit (10, 30) according to claim 1, wherein the at least first excitation electronic unit (11) is configured to emit the first excitation signal for a conductive level measurement; and wherein
the at least second excitation electronic unit (12) is configured to emit the second excitation signal for a capacitive level measurement.

3. Electronic unit (10, 30) according to claim 1 or claim 2, wherein the first excitation signal and the second excitation signal have different frequencies.

4. Electronic unit (10, 30) according to any one of the preceding claims, wherein the first excitation electronic unit (11) is configured to emit a square wave signal and/or a sinusoidal signal as a first excitation signal, preferably for conductive level measurement, wherein the square wave signal and/or the sinusoidal signal is preferably emitted at a frequency of 5 kHz.

5. Electronic unit (10, 30) according to any one of the preceding claims, wherein the second excitation electronic unit (12) is configured to emit a triangular signal and/or a sinusoidal signal and/or a square-wave signal as a second excitation signal, preferably for a capacitive level measurement, wherein the triangular signal and/or the sinusoidal signal and/or the square-wave signal is preferably emitted with a frequency of 355 kHz.

6. Electronic unit (10, 30) according to any one of the preceding claims, wherein the first excitation electronic unit (11) and/or the second excitation electronic unit (12) comprises at least one Direct Digital Synthesis (DDS; "Direct Digital Synthesis") unit to provide the first excitation signal and/or the second excitation signal.

7. Electronic unit (10, 30) according to any one of the preceding claims, wherein the first excitation electronic unit (11, 31) and the second excitation electronic unit (12, 31) are configured to emit the first excitation signal and the second excitation signal such that the first excitation signal and the second excitation signal have the same arithmetic mean value.

8. Electronic unit (10, 30) according to any one of the preceding claims, wherein the electronic unit (10, 30) further comprises at least one first evaluation electronic unit (16) for evaluating a conductive level measurement and/or at least one second evaluation electronic unit (17) for evaluating a capacitive level measurement, wherein a combined output signal of the level measuring probe (15, 34) is present as input signal of the first evaluation electronic unit (16) and/or of the second evaluation electronic unit (17).

9. Electronic unit (10, 30) according to claim 8, wherein the first evaluation electronic unit (16) is assigned a first filter unit (18) which is configured to filter a first output signal for a conductive level measurement from the combined output signal; and/or wherein the second evaluation electronic unit (17) is assigned a second filter unit (19) which is configured to filter a second output signal for a capacitive level measurement from the combined output signal.

10. Electronic unit (10, 30) according to claim 8 or claim 9, wherein the first filter unit (18) is provided as a digital filter unit comprising at least one bandpass filter unit whose center frequency corresponds to the first excitation signal; and/or wherein the second filter unit (19) is provided as a digital filter unit comprising at least one bandpass filter unit whose center frequency corresponds to the second excitation signal.

11. Electronic unit (10, 30) according to any one of the preceding claims, wherein the electronic unit (10, 30) comprises at least a first digital-to-analog converter unit (33) configured to convert at least a digital excitation signal of the electronic unit (10, 30) into an analog excitation signal that can be emitted as an analog excitation signal to the level measuring probe (15, 34).

12. Electronic unit (10, 30) according to any one of the preceding claims, wherein the electronic unit (10, 30) comprises at least a second analog-to-digital converter unit (36) configured to convert an analog output signal of the level measuring probe (15, 34) into a digital output signal which can be emitted as a digital output signal to the evaluation electronic units (16, 17, 31).

13. Electronic unit (10, 30) according to any one of the preceding claims, wherein the electronic unit (10, 30) comprises a weighting unit which is configured to weight the measurement results of a conductive level measurement and a capacitive level measurement in dependence on a medium-specific property of the medium whose level is detected, wherein the medium-specific property is preferably the electrical conductivity and/or the dielectric constant of the medium whose level is detected, in particular wherein one or more media-specific properties are determined from a test signal and/or a calibration signal.

14. Level measuring probe (15, 34) for measuring a level, comprising at least one electronic unit (10, 30) according to any one of claims 1 to 13.

15. Use of an electronic unit (10, 30) according to any one of claims 1 to 13 in a level measurement sensor for measuring a level.

## Revendications

1. Unité électronique (10, 30) pour une sonde de mesure de niveau de remplissage (15, 34) pour la mesure d'un niveau de remplissage d'un milieu, comprenant :
au moins une première unité électronique d'excitation (11),
conçue pour délivrer un premier signal d'excitation ;
au moins une deuxième unité électronique d'excitation (12),
conçue pour délivrer un deuxième signal d'excitation ; dans laquelle
le premier signal d'excitation et le deuxième signal d'excitation sont différents ;
**caractérisée en ce que**
l'unité électronique (10, 30) est conçue pour délivrer simultanément le premier signal d'excitation et le deuxième signal d'excitation à une sonde de mesure de niveau de remplissage (15, 34).

2. Unité électronique (10, 30) selon la revendication 1, dans laquelle ladite au moins une première unité électronique d'excitation (11) est conçue pour délivrer le premier signal d'excitation pour une mesure de niveau de remplissage conductive ; et dans laquelle
ladite au moins une deuxième unité électronique d'excitation (12) est conçue pour délivrer le deuxième signal d'excitation pour une mesure de niveau de remplissage capacitive.

3. Unité électronique (10, 30) selon la revendication 1 ou la revendication 2, dans laquelle le premier signal d'excitation et le deuxième signal d'excitation présentent des fréquences différentes.

4. Unité électronique (10, 30) selon l'une des revendications précédentes, dans laquelle la première unité électronique d'excitation (11) est conçue pour délivrer un signal rectangulaire et/ou un signal sinusoïdal en tant que premier signal d'excitation, de préférence pour une mesure de niveau de remplissage conductive, le signal rectangulaire et/ou le signal sinusoïdal étant délivrés de préférence à une fréquence de 5 kHz.

5. Unité électronique (10, 30) selon l'une des revendications précédentes, dans laquelle la deuxième unité électronique d'excitation (12) est conçue pour délivrer un signal triangulaire et/ou un signal sinusoïdal et/ou un signal rectangulaire en tant que deuxième signal d'excitation, de préférence pour une mesure de niveau de remplissage capacitive, le signal triangulaire et/ou le signal sinusoïdal et/ou le signal rectangulaire étant délivrés de préférence à une fréquence de 355 kHz.

6. Unité électronique (10, 30) selon l'une des revendications précédentes, dans laquelle la première unité électronique d'excitation (11) et/ou la deuxième unité électronique d'excitation (12) comprennent au moins une unité de synthèse numérique directe (Direct Digital Synthesis, DDS) pour fournir le premier signal d'excitation et/ou le deuxième signal d'excitation.

7. Unité électronique (10, 30) selon l'une des revendications précédentes, dans laquelle la première unité électronique d'excitation (11, 31) et la deuxième unité électronique d'excitation (12, 31) sont conçues pour délivrer le premier signal d'excitation et le deuxième signal d'excitation de telle sorte que le premier signal d'excitation et le deuxième signal d'excitation présentent la même valeur moyenne arithmétique.

8. Unité électronique (10, 30) selon l'une des revendications précédentes, dans laquelle l'unité électronique (10, 30) comprend en outre au moins une première unité électronique d'évaluation (16) pour évaluer une mesure de niveau de remplissage conductive et/ou au moins une deuxième unité électronique d'évaluation (17) pour évaluer une mesure de niveau de remplissage capacitive, un signal de sortie combiné de la sonde de mesure de niveau de remplissage (15, 34) étant appliqué en tant que signal d'entrée de la première unité électronique d'évaluation (16) et/ou de la deuxième unité électronique d'évaluation (17).

9. Unité électronique (10, 30) selon la revendication 8, dans laquelle une première unité de filtrage (18) est associée à la première unité électronique d'évaluation (16), laquelle est conçue pour filtrer un premier signal de sortie pour une mesure de niveau de remplissage conductive à partir du signal de sortie combiné ; et/ou dans laquelle une deuxième unité de filtrage (19) est associée à la deuxième unité électronique d'évaluation (17), laquelle est conçue pour filtrer un deuxième signal de sortie pour une mesure de niveau de remplissage capacitive à partir du signal de sortie combiné.

10. Unité électronique (10, 30) selon la revendication 8 ou la revendication 9, dans laquelle la première unité de filtrage (18) est fournie sous la forme d'une unité de filtrage numérique qui comprend au moins une unité de filtrage passe-bande dont la fréquence centrale correspond au premier signal d'excitation ; et/ou dans laquelle la deuxième unité de filtrage (19) est fournie sous la forme d'une unité de filtrage numérique qui comprend au moins une unité de filtrage passe-bande dont la fréquence centrale correspond au deuxième signal d'excitation.

11. Unité électronique (10, 30) selon l'une des revendications précédentes, dans laquelle l'unité électronique (10, 30) comprend au moins une première unité de conversion numérique-analogique (33) qui est conçue pour convertir au moins un signal d'excitation numérique de l'unité électronique (10, 30) en un signal d'excitation analogique qui peut être délivré à la sonde de mesure de niveau de remplissage (15, 34) sous la forme d'un signal d'excitation analogique.

12. Unité électronique (10, 30) selon l'une des revendications précédentes, dans laquelle l'unité électronique (10, 30) comprend au moins une deuxième unité de conversion analogique-numérique (36) qui est conçue pour convertir un signal de sortie analogique de la sonde de niveau de remplissage (15, 34) en un signal de sortie numérique qui peut être délivré aux unités électroniques d'évaluation (16, 17, 31) sous la forme d'un signal de sortie numérique.

13. Unité électronique (10, 30) selon l'une des revendications précédentes, dans laquelle l'unité électronique (10, 30) comprend une unité de pondération qui est conçue pour pondérer les résultats de mesure d'une mesure de niveau de remplissage conductive et d'une mesure de niveau de remplissage capacitive en fonction d'une propriété spécifique au milieu du milieu dont le niveau de remplissage est détecté, dans laquelle la propriété spécifique au milieu est de préférence la conductivité électrique et/ou la constante diélectrique du milieu dont le niveau de remplissage est détecté, en particulier dans laquelle une ou plusieurs propriétés spécifiques au milieu sont déterminées à partir d'un signal de test et/ou d'un signal de calibrage.

14. Sonde de mesure de niveau de remplissage (15, 34) pour mesurer un niveau de remplissage, comprenant au moins une unité électronique (10, 30) selon l'une des revendications 1 à 13.

15. Utilisation d'une unité électronique (10, 30) selon l'une des revendications 1 à 13 dans une sonde de mesure de niveau de remplissage pour mesurer un niveau de remplissage.
